(19) Europäisches Patentamt
European Patent Office
Office européen des brevets

(11) **EP 0 426 336 B1**

(12) **EUROPEAN PATENT SPECIFICATION**

(45) Date of publication and mention
of the grant of the patent:
**29.05.1996 Bulletin 1996/22**

(51) Int Cl.⁶: **H04N 1/32**, H04N 1/41

(21) Application number: **90311489.0**

(22) Date of filing: **19.10.1990**

(54) **Compression of a PCM facsimile signal for transmission in a packet switching network**

Kompression eines PCM-Faksimilesignals zur Übertragung in einem Paket-Vermittlungsnetz

Compression d'un signal fac-similé PCM pour transmission dans un système de commutation progiciel

(84) Designated Contracting States:
**DE FR GB IT**

(30) Priority: **30.10.1989 US 428560**

(43) Date of publication of application:
**08.05.1991 Bulletin 1991/19**

(73) Proprietor: **AT&T Corp.**
**New York, NY 10013-2412 (US)**

(72) Inventors:
• **Anderton, David O.**
**Westminster, Colorado 80030 (US)**
• **Daggett, Ronald L.**
**Red Bank, New Jersey 07701 (US)**

(74) Representative:
**Buckley, Christopher Simon Thirsk et al**
**AT&T (UK) LTD.,**
**AT&T Intellectual Property Division,**
**5 Mornington Road**
**Woodford Green, Essex IG8 0TU (GB)**

(56) References cited:
EP-A- 0 314 122          EP-A- 0 318 661
DE-A- 3 510 763          JP-A- 1 046 368
US-A- 4 703 477          US-A- 4 734 780

• **IEEE NETWORK, vol. 2, no. 6, November 1988,
pages 37-51, New York, NY, US; J.C. KOHLI et al.:
"Emerging broadband packet-switch
technology in integrated information networks"**

## Description

This invention relates to apparatus for transmitting digital signals to, and to apparatus for receiving a digital bit stream from, a transmission network.

In modern digital transmission systems facsimile calls are transmitted in the same channel as voice and voiceband data calls. Recently, facsimile, voice and voiceband data calls have been transmitted in the same channel by employing voiceband signal compression techniques such as Adaptive Differential PCM (ADPCM) and digital speech interpolation. Additionally, it is noted that no indication is provided, by associated switching or other equipment, to the transmission network as to the nature of the current call, i.e., facsimile, voice or voiceband data.

The increase in use of facsimile has led to the inefficient utilization of prior transmission resources. This inefficiency results because traditional analog or modem based facsimile transmission is time and bandwidth intensive. This reduces the effectiveness of prior signal compression techniques and, consequently, the other signals, e.g., voice and voiceband data, cannot share the channel bandwidth resources.

EP-A-0529104 (published 3rd March 1993) discloses a transmitter for detecting facsimile signals. The facsimile signals are each demodulated to obtain baseband signals which are transmitted to a remote receiver where they are remodulated to obtain the original facsimile signals. To this end, the demodulating apparatus comprises a plurality of facsimile demodulators each having a different mode of operation corresponding to a group 3 facsimile signal. At the receiver, a similar plurality of remodulators are needed to reconstruct the demodulated facsimile signal.

According to one aspect of this invention there is provided an apparatus as claimed in claim 1.

According to another aspect of this invention there is provided an apparatus as claimed in claim 10.

The inefficiencies of prior facsimile transmission arrangements are overcome by detecting the presence of a facsimile call and demodulating the page data, i.e. image data on a facsimile page or portion thereof, of the facsimile signal to obtain a baseband digital bit stream which is transported along with control information to a receiver. At the receiver the received baseband digital bit stream is remodulated in response to the control information to reconstruct a replica of the original modem modulated facsimile signal. This replica facsimile signal is then transported in a conventional manner to a receiving facsimile apparatus.

More specifically, during a facsimile call, facsimile control messages are obtained by demodulating and interpreting the facsimile control protocol. A controller in response to the obtained control messages, obtains the facsimile modem parameters, e.g. modem type and modem speed, and supplies them to a so-called facsimile page demodulator. The controller in response to the obtained control messages and other signals, also generates control signals for appropriately enabling and disabling the facsimile page data demodulator and a voiceband encoder, and for selecting an output from either the facsimile page data demodulator or voiceband encoder for transmission. Control information is also supplied for transmission in order to properly reconstruct the facsimile signal at a receiver.

In an exemplary embodiment, information being transmitted is formatted into packets and, further, efficiencies are realized by detecting the type of training sequence used for the facsimile page data portion of the call and communicating the training sequence type in compressed form to a remote receiver. In turn, the receiver is responsive to the supplied training sequence type to regenerate the proper training sequence.

In the Drawings :

FIG. 1 shows, in simplified block diagram form, details of a transmission system including an embodiment of the invention;

FIG. 2 graphically illustrates operation of controller 114 used in transmitter 101 of FIG. 1 for a standard facsimile call;

FIG. 3 graphically illustrates operation of controller 114 used in transmitter 101 of FIG. 1 for a so-called non-standard facsimile call;

FIG. 4 depicts, in simplified block diagram form, details of control channel demodulators 111 and 115 used in transmitter 101 and receiver 104, respectively, of FIG. 1;

FIG. 5 shows, in simplified block diagram form, details of facsimile page demodulator 112 of FIG. 1;

FIG. 6 graphically illustrates a facsimile packet format used in transmission network 102 of FIG. 1;

FIG. 7 depicts, in simplified block diagram form, details of facsimile page remodulator 117 of FIG. 1; and

FIG. 8 is a state diagram illustrating operation of selector controller unit 703 employed in facsimile page remodulator 117 of FIG. 7.

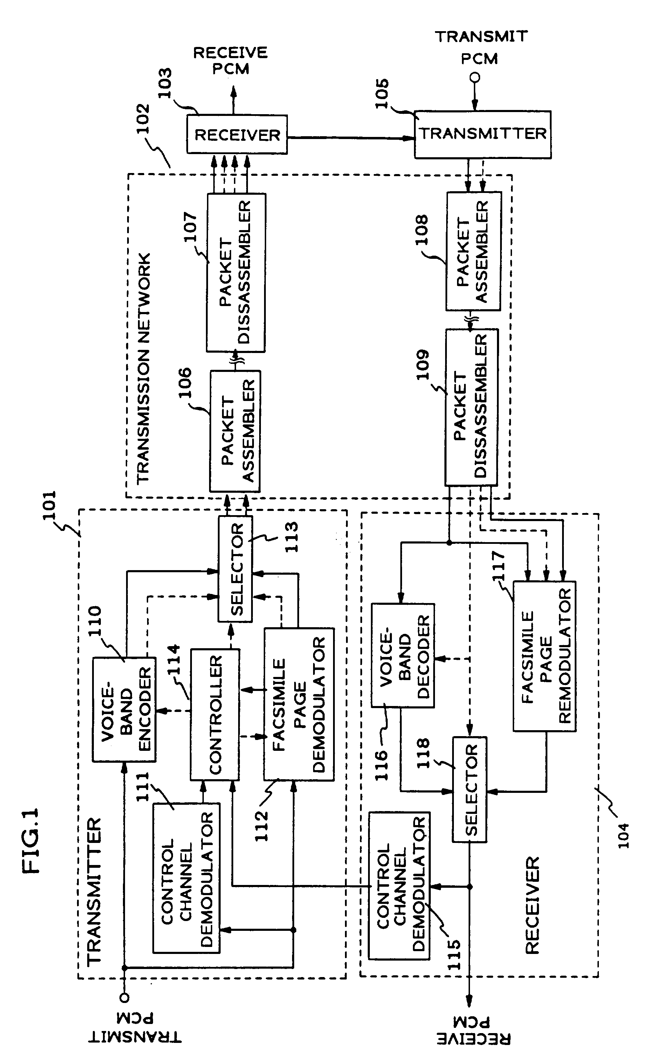

FIG. 1 shows, in simplified block diagram form, a transmission system employing an embodiment of the invention for compressing facsimile signals. Accordingly, shown are near-end transmitter 101 and far-end receiver 103 which are employed in conjunction with transmission network 102 for a first direction of transmission. Also shown are near-end receiver 104 and far-end transmitter 105 which are employed in conjunction with transmission network 102 for a second direction of transmission. In this example, not to be construed as limiting the scope of the invention, transmission network 102 is shown as including packet assembler 106 and packet disassembler 107 for transmission in the first direction, and packet assembler 108 and packet disassembler 109 for transmission in the second direction.

The transmissions between the near-end and far-end may be over any desired transmission medium. To this end, packet assemblers 106 and 108 include apparatus for supplying the assembled packets to the transmission medium and packet disassemblers 107 and 109 include apparatus for obtaining packets to be disassembled from the transmission medium. It is noted that transmitter 101, packet assembler 106, packet disassembler 107 and receiver 103 used in the first direction of transmission are, in this example, identical in structure and operation to their counterparts used in the second direction of transmission, namely, transmitter 105, packet assembler 108, packet disassembler 109 and receiver 104. Such packet assemblers and disassemblers are known in the art (see for example, United States patent US-A-4,703,477, issued October 27, 1987). Consequently, only transmitter 101 and receiver 104 will be described in detail.

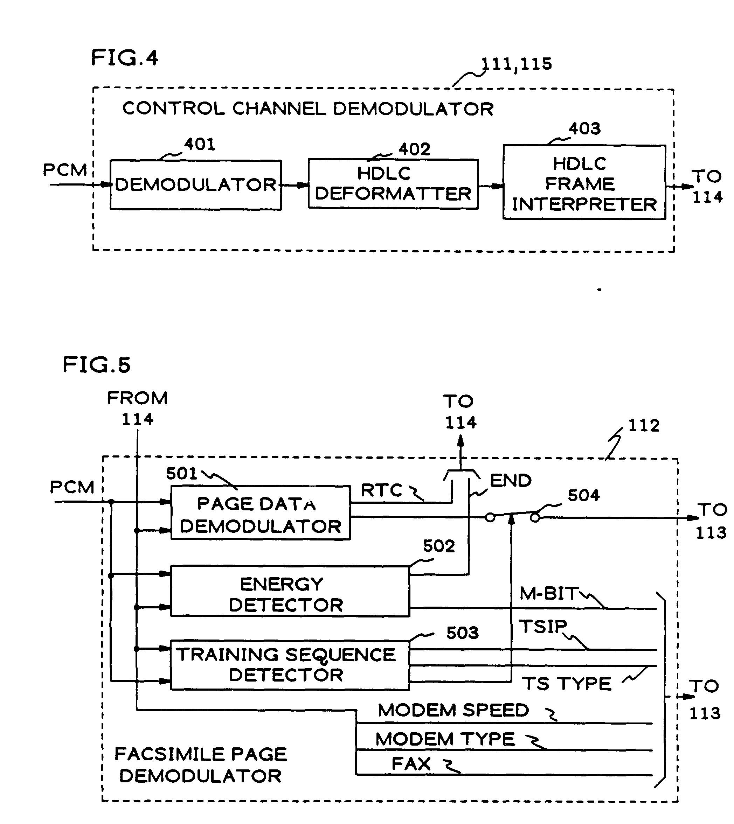

Transmit pulse code modulation (PCM) signals are supplied to transmitter 101 to be compressed for transmission via transmission network 102 to remote receiver 103, where they are reconstituted as received versions of the original PCM signals. The PCM signals are, in this example, well known DS0 channels from the DS1 format or channels from the CEPT1 Primary Digital Signal. It will be apparent to those skilled in the art that other signal formats, digital or otherwise, may be equally employed in practicing the invention. The transmit PCM signals are supplied in transmitter 101 to voiceband encoder 110, control channel demodulator 111 and facsimile page data demodulator 112 (hereinafter page demodulator 112). Voiceband encoder 110 may be any of known encoders employed in compressing voiceband PCM signals. In this example, an Adaptive Differential PCM (ADPCM) encoder is employed. Such ADPCM encoders are now well known in the art (see, for example CCITT Standard G. 721). The compressed PCM signals from voiceband encoder 110 are supplied to one input of selector 113. Additionally, when voiceband encoder 110 is enabled, it also supplies a control signal for transmission to selector 113 indicating the enabled condition. This control signal is a facsimile call indication (FAX) signal and is an indication that voiceband signals are being transmitted and facsimile page demodulator 112 is disabled, i.e., FAX=0. During a facsimile call voiceband encoder 110 is enabled in response to the FAX control signal from controller 114 to compress the control portion of the facsimile call, i.e. the facsimile call control messages. When facsimile page demodulator 112 is enabled , i.e., FAX=1, encoder 110 is disabled. Since an ADPCM encoder is employed in this example, it is reset to known initial state conditions in response to the FAX=1 control signal. It is noted that the control portion of the facsimile call is communicated with so-called low speed voiceband data and, therefore, is compressible using ADPCM. Although an ADPCM encoder is employed in this example, it will be apparent to those skilled in the art that some other type encoder may equally be employed that may require some other form of control or no control, e.g., a PCM encoder. Facsimile page demodulator 112 is a so-called modem demodulator which is enabled and disabled in response to the FAX control signal from controller 114. Facsimile page demodulator 112 is enabled when FAX=1. Additionally, facsimile page demodulator 112 is responsive to other control signals, i.e. facsimile call page data demodulation control signals, from controller 114 to demodulate the modem modulated page portion of the facsimile call. It is noted that the modem modulated signals representative of the information on a document page are demodulated to obtain a so-called baseband digital bit stream. In this manner, the bandwidth required to transmit the page portion of the facsimile call is significantly reduced. Facsimile page demodulator 112 is responsive to control signals from controller 114 to select the modem type and modem speed, i.e., the transmission rate, corresponding to the supplied facsimile signal to be demodulated. Additionally, facsimile page demodulator 112 is responsive to the supplied PCM signals to determine the presence of a facsimile signal, the end of the facsimile signal and the end of the page portion of the facsimile call, and supplies a so-called end of energy (END) signal and a return to control (RTC) signal indicating the same to controller 114. An output from facsimile page demodulator 112 is supplied to a second input of selector 113. Facsimile page demodulator 112 also supplies a plurality of so-called facsimile call remodulation control signals for transmission to selector 113 which are described below. In one example, the facsimile page information is transmitted in the CCITT Recommendation V.29 format. It will be apparent that facsimile page demodulator 112 also operates to demodulate partial page facsimile transmissions in a facsimile call (see for example CCITT Recommendation T.30, Revised, entitled "Procedures For Document Facsimile Transmission In The General Switched Telephone Network", which is included in CCITT document AP 1X-24 E, dated March 1988, pages 33-128). Details of facsimile page demodulator 112 are shown in FIG. 5 and described below.

For clarity of description, the voiceband and control outputs from voiceband encoder 110 and facsimile page demodulator 112 are shown as being supplied to a separate selector 113. However, it will be apparent that the selection function is readily realized by simply switching outputs of voiceband encoder 110 and facsimile page demodulator 112. It is noted that the facsimile call remodulation control signals, in this example, accompany the demodulated baseband digital bit stream as so-called side information by being placed in appropriate fields of a packet header in packet assembler 106 in a manner that will be apparent to those skilled in the art.

Control channel demodulator 111 demodulates the control component of any facsimile signals supplied in a PCM channel time slot to obtain the control messages therefrom. In this manner, the presence of a facsimile call is detected, in accordance with an aspect of the invention, without prior knowledge of its existence. These control messages are supplied to controller 114. In one example, the facsimile control messages are transmitted in the CCITT Recommendation V.21 format Control messages are obtained from a received channel via control channel demodulator 115 in a similar manner and supplied to controller 114. Control channel demodulators 111 and 115 are identical in structure and operation and are described below in conjunction with FIG. 4. It is to be noted that although both control channel demodulators 111 and 115 are being shown for clarity of description, a single such control channel demodulator is typically used in practice to demodulate both the transmit and receive control channels since they are half duplex. Thus, in practice only control channel demodulator 111 would be employed to demodulate the control portion of the facsimile call in both directions of transmission.

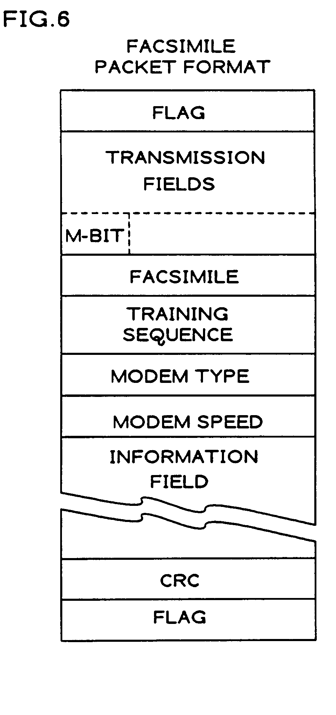

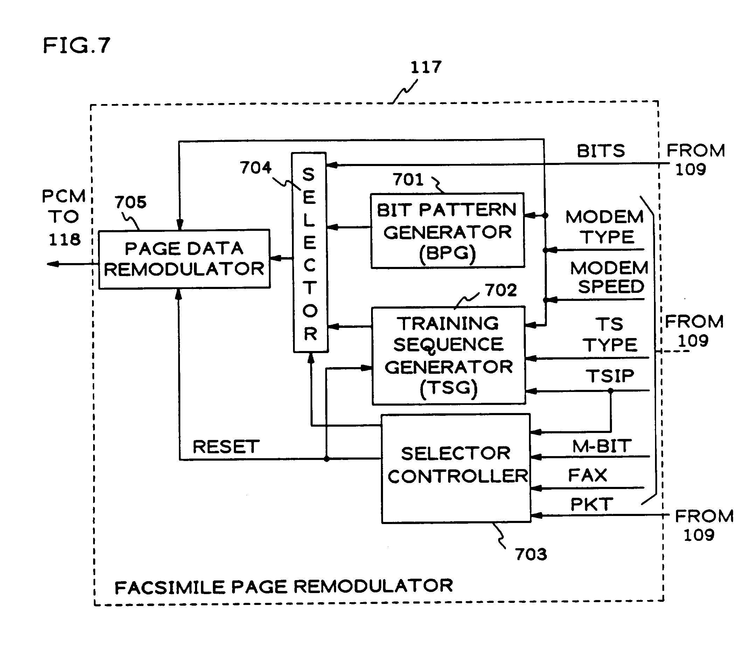

Controller 114 in response to the control messages from control channel demodulators 111 and 115, and the end of energy signal from facsimile page demodulator 112, in accordance with an aspect of the invention, generates control signals for enabling and disabling voiceband encoder 110, for enabling and disabling facsimile page demodulator 112, and for providing modem type and speed thereto, and for controlling the output selection via selector 113. Control information accompanies the selected output from selector 113 which is supplied to transmission network 102 and, therein, to packet assembler 106. In this example, as indicated above, the selected facsimile and control signals are supplied to packet assembler 106 to be formed into packets and transmitted via a transmission medium to a remote packet disassembler 107 and, in turn, to receiver 103. Control information accompanying the channel is inserted into predetermined fields in the header of the packets, in well known fashion and is described below in conjunction with FIG. 6 for a facsimile packet Selector 113 is responsive to control signals from controller 114 to select an output from either voiceband encoder 110 or facsimile page demodulator 112 and supply the selected output to packet assembler 106. As indicated above, this output selection function is readily realized in voiceband encoder 110 and facsimile page demodulator 112. From a received channel, packet disassembler 109 obtains a plurality of control signals, namely, FAX, modem type, modem speed, TS TYPE, TSIP and the M-bit signal from the received packet header and supplies them appropriately to voiceband decoder 116, facsimile page remodulator 117 and selector 118. Also supplied to facsimile page remodulator 117 from packet disassembler 109 is a signal indicating whether a packet is present, namely, PKT. Packet disassembler 109 also supplies the channel baseband digital bit stream (BITS) from the packet information field to voiceband decoder 116 and facsimile page remodulator 117. If the received channel contains other than facsimile page information, i.e., voiceband signals as determined by FAX=0, voiceband decoder 116 is enabled and selector 118 is controlled to select the output from voiceband decoder 116 as the received PCM signal. Voiceband decoder 116, in this example, is an ADPCM decoder which is compatible with voiceband encoder 110 (see CCITT Recommendation G.721). Again, during a facsimile call the control portion of the facsimile signal, i.e. the facsimile call control messages, is transmitted as a voiceband signal. Although an ADPCM decoder is employed in this example, it will be apparent to those skilled in the art that some other type decoder may equally be employed that may require some other form of control or no control, e.g., a PCM decoder. Upon termination of a signal to be decoded, voiceband decoder 116 resets to prescribed initial state conditions. If the channel contains demodulated facsimile page information, a control signal, in this example, FAX=1, enables facsimile page remodulator 117. Then, in response to other of the facsimile call remodulation control signals, facsimile page remodulator 117 remodulates the facsimile page data, i.e, the baseband digital bit stream, to obtain a replica of the original facsimile signal and selector 118 is controlled to select the output from facsimile page remodulator 117 as the received PCM signal. It will be apparent that facsimile page remodulator 117 also operates to remodulate partial page facsimile transmissions in a facsimile call (again, see the CCITT recommendation T.30, Revised, cited above). Details of facsimile page remodulator 117 are shown in FIG. 7 and described below. As in transmitter 101, the output selection is readily realized by switching outputs of voiceband decoder 116 and facsimile page remodulator 117. Selector 118 is being separately shown only for clarity of description.

Controller

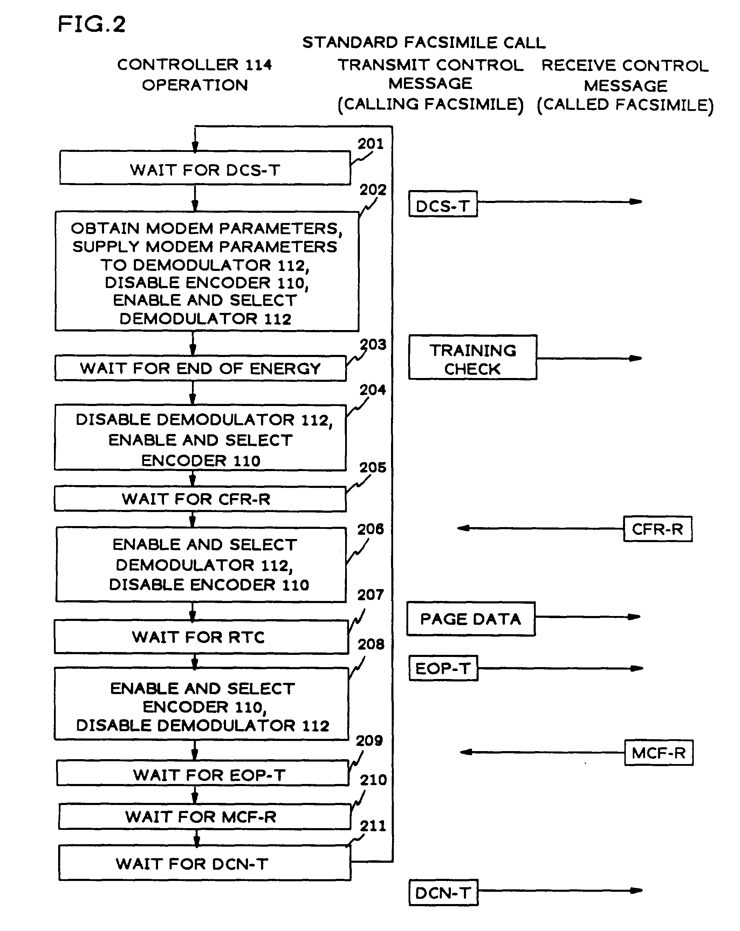

For simplicity and clarity of description, two simple examples of the operation of controller 114 will be described. To this end, FIG. 2 illustrates control signal interaction between transmitter 101 and receiver 103 and transmitter 105 and receiver 104 for a typical CCITT Recommendation G3 standard facsimile call. Additionally, shown in FIG. 2 is a sequence of operations effected in controller 114 for controlling voiceband encoder 110, facsimile page demodulator 112 and selector 113, and for generating control information to be supplied via voiceband encoder 110 and facsimile page demodulator 112 along with the channel information to packet assembler 106. In this example, it is assumed that a facsimile call has been established either by the standard exchange of facsimile tone signals between the near-end and far-end facsimile apparatus (not shown), or otherwise, as will be apparent to those skilled in the art. The control messages used in this example are standard CCITT facsimile control messages as described in CCITT Recommendation T.30, Revised, cited above.

As shown in FIG. 2, controller 114 is initially in idle state 201 waiting for transmit control message DCS-T (Digital Command Signal) from control channel demodulator 111 in transmitter 101 (FIG. 1). Upon receiving DCS-T, controller 114 enters state 202 and extracts modem parameters indicating the modem type and modem speed, i.e., the modem transmission rate, for this facsimile call from known fields in the transmit control message DCS-T. These modem parameters are supplied to facsimile page demodulator 112. Additionally, controller 114 supplies a disable encoder signal to voiceband encoder 110, a select page demodulator signal to selector 113, an enable page demodulator signal to facsimile page demodulator 112 and the modem parameters, i.e., modem type and speed, to facsimile page demodulator 112. Then, controller 114 enters state 203 and waits for an end of energy (END) signal which indicates the end of the training check portion of the facsimile call. This end of energy (END) signal is generated by facsimile page demodulator 112 and supplied to controller 114. Upon reception of the end of energy signal controller 114 enters state 204 and supplies a disable page demodulator signal to facsimile page demodulator 112, an enable encoder signal to voiceband encoder 110 and a select voiceband encoder signal to selector 113. Then, controller 114 enters state 205 and waits for reception of receive control message CFR-R (Confirmation To Receive) from control channel demodulator 115. In response to receive control message CFR-R, controller 114 enters state 206 and supplies a disable encoder signal to voiceband encoder 110, an enable page demodulator signal to facsimile page demodulator 112 and a select page demodulator signal to selector 113. Then, controller 114 waits while the facsimile page information is demodulated to obtain the desired baseband digital bit stream which is supplied via selector 113 to transmission network 102 and, therein, to packet assembler 106 for transmission to remote packet disassembler 107 and, in turn, to receiver 103. To this end, controller 114 enters state 207 and waits for a Return To Control (RTC) signal from facsimile page demodulator 112 indicating the end of the facsimile page data. Then, controller 114 enters state 208 and supplies the appropriate control signals to voiceband encoder 110, facsimile page demodulator 112 and selector 113 to select the voiceband path to be supplied to transmission network 102, as described above. Then, controller 114 enters state 209 and waits for transmit control message EOP-T (End of Procedure) and, subsequently, in state 210 waits for receive control message MCF-R (Message Confirmation) from control channel demodulator 115. Finally, controller 114 in state 211 waits for a transmit control message DCN-T (Disconnect) which indicates the end of facsimile call. Thereafter, controller 114 returns to state 201 and waits for a next transmit control message DCS-T which indicates a new facsimile call has been initiated.

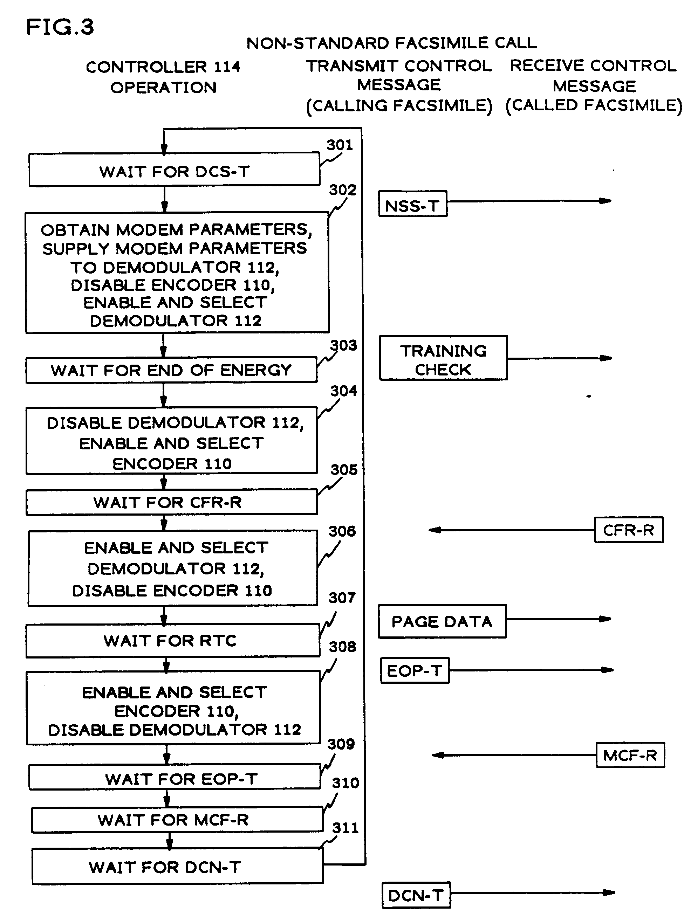

A second simple example of the operation of controller 114 for a simple non-standard facsimile call is illustrated in FIG. 3. Accordingly, controller 114 in state 301 initially waits for NSS-T (non-standard set up transmit signal) transmit control message from control channel demodulator 111 in transmitter 101 (FIG. 1). In response to transmit control message NSS-T, controller 114 enters state 302 and extracts the facsimile vendor code and country code from known fields in transmit control message NSS-T. Using these fields as an index, controller 114 looks up the bit positions of the modem type and speed parameters from a so-called non-standard facsimile table. The table indicates where the bits are located in the NSS-T frame which identify the modem type to be used and its speed. Then, controller 114 extracts and interprets the actual modem type and speed bits from the transmitted NSS-T message and supplies these modem parameters to facsimile page demodulator 112. Additionally, controller 114 supplies a disable encoder signal to voiceband encoder 110, an enable page demodulator signal to facsimile page demodulator 112 and the modem parameters, i.e., modem type and speed, to facsimile page demodulator 112. Then, controller 114 enters state 303 and waits for an end of energy (END) signal which indicates the end of the training check portion of the facsimile call. In this example, first end of energy signal is representative of the end of the training check. This end of energy signal (END) is generated by facsimile page demodulator 112 and supplied to controller 114. Upon reception of the end of energy (END) signal controller 114 enters state 304 and supplies a disable page demodulator signal to facsimile page demodulator 112, an enable encoder signal to voiceband encoder 110 and a select voiceband encoder signal to selector 113. Then, controller 114 enters state 305 and waits for reception of receive control message CFR-R (Confirmation To Receive) from control channel demodulator 115. In response to receive control message CFR-R, controller 114 enters state 306 and supplies a disable encoder signal to voiceband encoder 110, an enable page demodulator signal to facsimile page demodulator 112 and a select page demodulator signal to selector 113. Then, controller 114 waits while the facsimile page information is demodulated to obtain the desired baseband digital bit stream which is supplied via selector 113 to transmission network 102 and, therein, to packet assembler 106 for transmission to remote packet disassembler 107 and, in turn, to receiver 103. Thereafter, controller 114 enters state 307 and waits for a Return To Control (RTC) signal from facsimile page demodulator 112 indicating the end of the facsimile page data. Then, controller 114 enters state 308 and supplies the appropriate control signals to voiceband encoder 110, facsimile page demodulator 112 and selector 113 to select the voiceband path to be supplied to transmission network 102, as described above. Then, controller 114 enters state 309 and waits for transmit control message EOP-T (End of Procedure) and, subsequently, in state 310 waits for receive control message MCF-R (Message Confirmation) from control channel demodulator 115. Finally, controller 114 in state 311 waits for a transmit control message DCN-T (Disconnect) which indicates the end of facsimile call. Thereafter, controller 114 returns to state 301 and waits for a next transmit control message NSS-T which indicates a new facsimile call has been initiated.

Although operation of controller 114 has been described for a relatively simple facsimile call, it will be apparent to those skilled in the art how to expand the operation of controller 114 to any facsimile call, and specifically, those set forth in CCITT recommendation T.30, Revised, noted above.

Control Channel Demodulator

FIG. 4 shows, in simplified block diagram form, details of control channel demodulators 111 and 115, employed in transmitter 101 of FIG. 1 and receiver 104, respectively. Accordingly the transmit PCM digital signal is supplied to demodulator 401. which in this example, is a CCITT Recommendation V.21 demodulator of a type known in the art. It would be apparent to those skilled in the art that other formats, for example, CCITT Recommendation V.27ter, may equally be employed for control messages in a facsimile call. Demodulator 401, in this example, demodulates the control channel portion of the facsimile call. When used in control channel demodulator 111, demodulator 401 yields frames containing transmit control messages, as, for example, shown in FIGs. 2 and 3. When used in control channel demodulator 115, demodulator 401 yields frames containing receive control messages, also shown in FIGs. 2 and 3. The demodulated bits from demodulator 401 are supplied to High Level Data Link Control (HDLC) deformatter 402, where HDLC frame formatting is removed to yield the facsimile control messages in well known fashion. HDLC deformatter 402 also checks each frame for errors by calculating a cyclic redundancy check (CRC). In the event of a error, the corresponding HDLC frame is discards Such HDLC deformatters are known in the art (one example, being the commercially available integrated circuit, Motorola MC68652). The HDLC frames are supplied to HDLC frame interpreter 403 to obtain the desired CCITT Recommendation T.30 control messages. HDLC frame interpreter 403, is for example, a look up table including the known facsimile control messages as defined in the CCITT Recommendation T.30 noted above. The control messages are indexed in the table by bits in portions of the HDLC deformatted frames supplied from HDLC deformatter 402. Thereafter, the control messages and other parameters from the facsimile control protocol are supplied to controller 114.

Facsimile Page Demodulator

FIG. 5 shows, in simplified, block diagram form, details of facsimile page demodulator 112 employed in transmitter 101 of FIG. 1. Accordingly, shown are page data demodulator 501, energy detector 502 and training sequence detector 503. The transmit PCM digital signals are supplied to page data demodulator 501, energy detector 502 and training sequence detector 503. Also supplied to each of units 501, 502 and 503 are enable and disable page demodulator signals, i.e., FAX=1 and FAX=0, respectively, and modem type and modem speed parameters from controller 114. The FAX signal and modem type and modem speed parameters are also supplied as control signals from facsimile page demodulator 112 to selector 113 and, in turn, to packet assembler 106 for inclusion in the facsimile packet header. Page data demodulator 501, in this example, demodulates the facsimile page portion of the facsimile call to obtain a baseband digital bit stream. In this example, the facsimile page portion is demodulated by a modem in a manner as described in CCITT Recommendation V.29. It will be apparent to those skilled in the art how to employ the invention when other modem types are used to modulate the baseband digital bit stream, for example, the CCITT Recommendation V.27ter or the CCITT Recommendation V.33. Such page data demodulators are believed known in the art (see for example, the CCITT Recommendations for G3 facsimile calls). Page data demodulator 501 is responsive to the supplied modem parameters to appropriately demodulate facsimile page information and to supply the resulting baseband digital signal via controllable switch 504 to selector 113 (FIG. 1). Energy detector 502 is responsive to the enable page demodulator signal from controller 114 to be enabled for detecting the presence of facsimile page information in the channel of the supplied PCM signals. Detector 502 also generates a M-bit signal which when asserted indicates that energy continues to be present in the information spurt in the facsimile page. The M-bit is asserted during intervals when the return-to-control (RTC) signal is absent. When the return to control signal is present, indicating the absence of energy in a facsimile page portion of the call, the M-bit is not asserted. The M-bit is supplied via selector 113 to packet assembler 106 for inclusion in a packet header. Additionally, energy detector 502 supplies end-of-energy (END) signals to controller 114 indicating the end of the training check and the end of the facsimile page information. Training sequence detector 503 is responsive to the modem parameters from controller 114 to detect the type of training sequence in the facsimile call channel of the supplied PCM signals. These training sequences are generally sent by the sending facsimile apparatus at the beginning of the training sequence and each facsimile page spurt. Upon detection of a training sequence, training sequence detector 503 generates a signal to disable controllable switch 504 disabling the output of demodulated facsimile page bits from page data demodulator 501. Additionally, training sequence detector 503 supplies a training sequence in progress (TSIP) signal and a representation of the training sequence type (TS TYPE) via selector 113 to packet assembler 106. Examples of typical training sequences are also described in the CCITT G3 facsimile modem specifications. At the conclusion of the training sequence, training sequence detector 503 generates a signal to enable controllable switch 504, thereby allowing facsimile page data from page data demodulator 501 to be supplied to selector 113, and terminates generation of TSIP. The purpose of training sequence detector 503 is to efficiently convey to the far-end the existence of a training sequence and its type. In this example, a relatively short message is employed to convey to the far-end the same training sequence information. The compression in the training sequence information results from turning to account the realization that there is a relatively small number of training sequence types.

Packet Format

FIG. 6 shows in simplified form a facsimile packet format which is generated in packet assembler 106 (FIG. 1). It will be apparent to those skilled in the art how to assemble the packet header information in an efficient manner. Accordingly, shown at the beginning of the packet and end of the packet are the typical flags for delimiting the packet. Also shown, are a number of transmission fields that are employed for the usual packet transmission information which is known and not described here. Thereafter, there is shown a portion of a field for transporting the M-bit supplied from facsimile page demodulator 112. A facsimile field is shown for indicating whether or not the output is from facsimile page demodulator 112, for the current packet (FAX=1 indicates that the output is from facsimile page demodulator 112 and FAX=0 indicates that the output is from voiceband encoder 110). The FAX signal, modem type field and the modem speed field are supplied from controller 114 via facsimile page demodulator 112 and selector 113. Information for the training sequence field, which includes TSIP and TS TYPE is supplied from facsimile page demodulator 112. A typical information field is shown along with a CRC field for the cyclic redundancy check bits. The information field includes the facsimile page bits that are generated by page data demodulator 501. During a training sequence, only the header portion of the packet is transmitted, i.e., the information field is not transmitter. It will be apparent to those skilled in the art how to assemble such a packet. The packets are transmitted over known transmission media to a remote location where they are disassembled in well known fashion in packet disassembler 107 to obtain the desired information. In turn, the recovered information is supplied to receiver 103.

Although not specifically shown, packet assembler 106 also generates packets in a voiceband format for transporting the voiceband output from voiceband encoder 110. The voiceband packet format is similar to the facsimile packet format shown in FIG.6 but does not include the training sequence, modem type and modem speed fields, and the FAX control signal is set to FAX=0.

For the voiceband packets the FAX signal is supplied from controller 114 via voiceband encoder 110 and selector 113.

Facsimile Page Remodulator

FIG. 7 shows, in simplified block diagram form, details of facsimile page remodulator 117 employed in receiver 104 of FIG. 1. Accordingly, shown are bit pattern generator (BPG) 701, training sequence generator (TSG) 702, selector controller 703, selector 704 and page data remodulator 705. Information from a received packet is obtained from packet disassembler 109, including information bits (BITS), training sequence type (TS TYPE), training sequence in progress (TSIP), packet present (PKT), M-bit, the modem parameter information, i.e., modem type and speed, and the facsimile call indicator FAX. The FAX signal enables and disables facsimile page remodulator 117, as is explained below. The information BITS are supplied to selector 704. TS TYPE and TSIP are supplied to training sequence generator 702. TSIP, M-bit, FAX and PKT are supplied to selector controller 703. It is noted that PKT is generated by packet disassembler 109 and indicates whether or not a packet is present. The modem parameters, i.e., modem type and speed, are supplied to units 701, 702, 703 and 705. Bit pattern generator 701 is responsive to the modem type and speed parameters for continually supplying as an output an optimized set of bits to selector 704 for the purpose of compensating for an inadvertent loss of packet. This set of bits is needed to maintain proper operation of page data remodulator 705 in the event that there are no bits (BITS) from a received packet. Training sequence generator 702 is responsive to the modem type and speed parameters, TS TYPE, and TSIP to regenerate data bit patterns indicative of the appropriate training sequence to be supplied to selector 704. Training sequence generator 702 is responsive to a RESET signal from selector controller 703 to initialize generation of the appropriate training sequence. Page data remodulator 705 is responsive to the modem parameters, i.e., type and speed, and to the RESET signal from selector controller 703, to remodulate the baseband facsimile page portion of the facsimile call (BITS) from selector 704 to obtain a reconstructed modem modulated facsimile signal. Page data remodulator 705 is, in this example, a CCITT Recommendation V.29 type remodulator. Again, it will be apparent to those skilled in the art that other CCITT facsimile formats maybe employed, for example V.27ter or V.33.

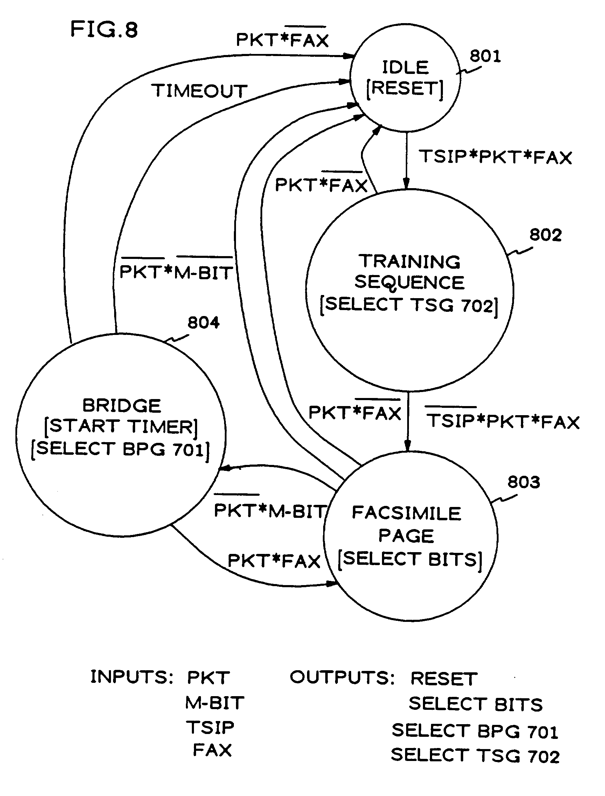

Selector controller 703 operates to select either BITS, an output from bit pattern generator (BPG) 701, or an output from training sequence generator (TSG) 702 to be supplied via selector 704 to page data remodulator 705. Additionally, a RESET signal is supplied from selector controller 703 to training sequence generator 702 and page data remodulator 705. To this end, FIG. 8 shows a state diagram illustrating states in the operation of selector controller 703. Accordingly, selector controller 703 is initially in idle state 801 waiting for a training sequence facsimile packet as indicated by TSIP, PKT and FAX being asserted (TSIP*PKT*FAX). Upon receipt of the asserted TSIP, PKT and FAX signals, selector controller 703 transitions to training sequence state 802. During state 802, selector 704 is configured to select the training sequence output from TSG 702. If while in state 802, FAX is negated ,i.e., ($\overline{FAX}$),selector controller 703 transitions back to idle state 801 and a RESET is generated. While in state 802, selector controller 703 waits for a normal (as opposed to a training sequence) facsimile page information packet (indicated by $\overline{TSIP}$*PKT*FAX). If this event does not occur by the end of a training sequence controller 703 transitions back to state 801 and resets remodulator 705. Upon the occurrence of this event (i.e., $\overline{TSIP}$*PKT*FAX), selector controller 703 transitions to facsimile page state 803. During state 803, selector 704 is configured to select BITS as an output. Selector controller 703 remains in facsimile page state 803 until packets stop arriving (indicated by occurrence of $\overline{PKT}$) or FAX is negated (indicated by $\overline{FAX}$). If $\overline{PKT}$ occurs and the M-bit is not set as indicated by ($\overline{PKT}$*$\overline{M\text{-}BIT}$), or if PKT is asserted and FAX is negated (indicated by PKT*$\overline{FAX}$), selector controller 703 transitions back to idle state 801. Additionally, if while in state 803 $\overline{PKT}$ occurs and the M-bit of the previous packet was set, a packet has been lost as indicated by ($\overline{PKT}$*M-BIT), and selector controller 703 transitions to bridge state 804. During bridge state 804, selector 704 is configured to supply the output from BPG 701 to page data remodulator 705. Additionally, a timer (not shown) is initiated. If during the timer interval, a packet (PKT) arrives and FAX is asserted as indicated by (PKT*FAX), the timer is disabled, and selector controller 703 transitions back to facsimile page state 803. In state 803, selector 704 is again configured to supply BITS to page data remodulator 705. Alternatively, if the timer interval expires while selector controller 703 is in bridge state 804, the lost packet was the last packet of the facsimile page and selector controller 703 transitions to idle state 801 waiting for the next facsimile page information. Additionally, if while in state 804 FAX is negated and PKT is asserted as indicated by (PKT*$\overline{FAX}$), selector controller 703 transitions back to idle state 801. While in idle state 801, selector controller 703 generates a RESET signal, which resets both page data remodulator 705 and training sequence generator 702.

## Claims

1.  An apparatus for transmitting (101 or 105) incoming digital signals (PCM) representative of voiceband signals from at least voice and/or facsimile calls to a transmission network (102), the signals representative of voiceband signals from each of the facsimile calls having portions including facsimile call control messages and portions including modulated facsimile call page data, the apparatus including

    a digital encoder (110) for encoding and compressing the incoming digital signals representative of the voiceband signals from the voice and/or facsimile calls,
    the apparatus being CHARACTERIZED BY
    a control channel demodulator (111) for demodulating the control message portion of a facsimile call to obtain demodulated facsimile call control messages,
    controller apparatus (114) supplied with said demodulated facsimile call control messages for generating facsimile call page data demodulation control signals and a facsimile call indication signal, hereinafter FAX signal (FAX), said FAX signal being representative of whether a current portion of the call is the facsimile call control message portion or the facsimile call page data portion,
    a page data demodulator (112) means responsive to said facsimile call page data demodulation control signals and said FAX signal for demodulating the facsimile call page data into a baseband digital bit stream and for generating additional control signals, said facsimile call page data demodulation control signals, said FAX signal and said additional control signals being supplied as facsimile call remodulation control signals as an output from said page data demodulator (112) with said baseband digital bit stream, and
    selector apparatus (110, 112, 113) responsive to said FAX signal for selectively supplying an output to the transmission network from either the digital encoder (110) during facsimile call control message portions of the facsimile call or said page data demodulator (112) during facsimile call page data portions of the facsimile call, such that either encoded facsimile call control message portions of the facsimile call and said FAX signal, or said baseband digital bit stream representative of facsimile call page data portions of the facsimile call and said facsimile call remodulation control signals are supplied to the transmission network.

2.  An apparatus as claimed in claim 1 wherein said selector apparatus (110, 112, 113) includes first control apparatus in said digital encoder (110) which is responsive to a prescribed one of said control signals (FAX) from the controller apparatus (114) for controllably enabling and disabling supplying an output from said digital encoder (110), and second control apparatus in said page data demodulator (112) which is responsive to said prescribed one of said control signals from the controller apparatus (114) for controllably disabling and enabling supplying an output from the page data demodulator (114), such that the when digital encoder is enabled the page data demodulator is disabled and vice versa.

3. Apparatus as claimed in claim 2 wherein said facsimile call page data includes modem modulated baseband facsimile page data, and said page data demodulator (112) includes demodulator apparatus (501) responsive to the page data demodulation control signals the from controller apparatus (114) for demodulating said modem modulated baseband facsimile page data to obtain said baseband digital bit stream.

4. Apparatus as claimed in claim 3 wherein the controller apparatus (114) is responsive to said control messages for generating page data demodulation control signals representative of a modem type and a modem transmission rate of a modem employed to generate said facsimile call page data, said modem type and modem transmission rate control signals being supplied to the demodulator apparatus (501), and the demodulator apparatus (501) being responsive to said modem type and modem transmission rate control signals to demodulate said facsimile call page data to obtain said baseband digital bit stream.

5. Apparatus as claimed in claim 3 wherein said demodulator apparatus (501) generates a signal (RTC) representative of the end of said facsimile call page data, said page data demodulator (112) includes energy detector apparatus (502) responsive to said page data demodulation control signals for detecting the presence or absence of energy in a facsimile page data portion of the facsimile call and for generating a signal (END) representative thereof, said signal (RTC) representative of the end of said facsimile call page data and said signal (END) representing the presence or absence of energy in the facsimile page data portion of the facsimile call being supplied to said controller apparatus (114), and said controller apparatus (114) being responsive to said signal (RTC) representative of the end of said facsimile call page data, and to said signal (END) representative of the presence or absence of energy in the facsimile page data portion of the facsimile call for generating said enable and disable control signals.

6. Apparatus as claimed in claim 5 wherein said page data demodulator (112) includes training sequence detector apparatus (503) for detecting the presence of a training sequence in said facsimile call and for generating training sequence control signals representative of a training sequence in progress and the type of training sequence, said selector apparatus (113) supplies a control signal (FAX) to said transmission network representative of that said digital encoder (110) is enabled and that page data demodulator (112) is disabled along with an output from said digital encoder (110), and supplies control signals as said remodulation control signals to said transmission network representative that said digital encoder (110) is disabled and that said page data demodulator (112) is enabled (FAX), said modem type, said modem transmission rate, said training sequence in progress (TSIP), said training sequence type (TS TYPE) and said signal (M-BIT) representative of the presence or absence of energy during the facsimile page data portion of the facsimile call when said page data demodulator (112) is enabled, said page data demodulator (112) including apparatus (504) for inhibiting an output from said demodulator apparatus (501) during intervals in which said training sequence detection apparatus (503) indicates that a training sequence is in progress.

7. Apparatus as claimed in claim 6 wherein said transmission network (102) includes packet assembler apparatus (106 or 108) for generating a packet including at least a header having a plurality of fields and a data field, the bits of said baseband digital bit stream being inserted into said data field, and said remodulation control signals supplied along with said baseband digital bit stream being inserted in prescribed fields in said header.

8. Apparatus as claimed in claim 6 wherein said transmission network (102) includes packet assembler apparatus (106 or 108) for generating a packet including at least a header having a plurality of fields, said control signals indicating a training sequence in progress and the training sequence type, along with others of the control signals being inserted into prescribed fields of the packet header and the packet being transmitted without a data field.

9. Apparatus as claimed in claim 1 including receiver apparatus (104 or 103) for receiving a digital bit stream including voiceband signal representations of at least voice and/or facsimile calls, as supplied from a transmitter apparatus claimed in claim 1, from the transmission network (102), the receiver apparatus including

a digital decoder (116) for decoding encoded voiceband signals in the received digital bit stream from the transmission network (102),
a facsimile page data remodulator (117) responsive to received facsimile call remodulation control signals from the received digital bit stream for recomposing facsimile call page data from a received baseband digital bit stream in the received digital bit stream, and selector apparatus (118) responsive to a received facsimile call indication signal, hereinafter received FAX signal, (FAX) from the received digital bit stream for selecting an output from either said digital decoder (116) or said facsimile page data remodulator (117), such that the output from said digital decoder including facsimile call control messages is selected as the output when said received FAX signal indicates a facsimile call control message portion of the facsimile call, and such that the output from the facsimile page data demodulator including representations of modem modulated facsimile call page data is selected as the output by the selector apparatus (118) when the received FAX signal indicates a facsimile call page data portion of the facsimile call.

10. Apparatus (104 or 103) for receiving a digital bit stream including voiceband signal representations of at least voice and/or facsimile calls, as supplied from a transmitter apparatus claimed in claim 1, from the transmission network (102), the receiver apparatus including

a digital decoder (116) for decoding encoded voiceband signals in the received digital bit stream from the transmission network (102), the apparatus being CHARACTERIZED BY a facsimile page data remodulator (117) responsive to received facsimile call remodulation control signals from the received digital bit stream for recomposing facsimile call page data from a received baseband digital bit stream in the received digital bit stream, and selector apparatus (118) responsive to a received facsimile call indication signal, hereinafter received FAX signal, from the received digital bit stream for selecting an output from either said digital decoder (116) or said facsimile page data remodulator (117), such that the output from said digital decoder including facsimile call control messages is selected as the output when said received FAX signal indicates a facsimile call control message portion of the facsimile call, and such that the output from the facsimile page data demodulator including representations of modem modulated facsimile call page data is selected as the output by the selector apparatus (118) when the received FAX signal indicates a facsimile call page data portion of the facsimile call.

11. Apparatus as claimed in claim 10 wherein said facsimile page data remodulator (117) includes page data remodulator apparatus (705) for remodulating said received baseband digital bit stream to obtain modem modulated facsimile page data.

12. Apparatus as claimed in claim 11 wherein the facsimile page data remodulator (117) includes bit pattern generator apparatus (701) for generating a prescribed bit pattern in response to prescribed ones of the received control signals, training sequence generator apparatus (702) for generating a training sequence in response to prescribed ones of the received control signals, page data remodulator data apparatus (705), selector controller apparatus (703) being responsive to prescribed ones of the received control signals for controlling selector apparatus (704) to supply either the received baseband digital bit stream, or an output from the bit pattern generator apparatus (701) or an output from the training sequence generator apparatus (702) to the page data remodulator apparatus (705).

**Patentansprüche**

1. Vorrichtung (101 oder 105) zur Übertragung ankommender Digitalsignale (PCM), die Sprachbandsignale von wenigstens Sprach- und/oder Facsimileanrufen zu einem Übertragungsnetzwerk (102) darstellen, wobei die Sprachbandsignale jedes Facsimileanrufs darstellenden Signale Teile einschließlich von Facsimileanruf-Steuernachrichten und Teile einschließlich modulierter Facsimileanruf-Seitendaten enthalten und die Vorrichtung einen digitalen Codierer (110) zur Codierung und Kompression der ankommenden Datensignale aufweist, die die Sprachbandsignale der Sprach- und/oder Facsimileanrufe darstellen,

gekennzeichnet durch einen Steuerkanal-Demodulator (111) zur Demodulierung des Steuernachrichtenteils eines Facsimileanrufs zur Gewinnung demodulierter Facsimileanruf-Steuernachrichten, eine Steuereinrichtung (114), der die demodulierten Facsimileanruf-Steuernachrichten zur Erzeugung von Facsimileanruf-Seitendaten-Demodulationssteuersignalen und eines Facsimileanruf-Anzeigesignals, nachfolgend FAX-Signal (FAX) genannt, zugeführt werden, wobei das FAX-Signal angibt, ob ein augenblicklicher Teil des Anrufs der Facsimileanruf-Steuernachrichtenteil oder der Facsimileanruf-Seitendatenteil ist, einen Seitendatendemodulator (112), der unter Ansprechen auf die Facsimileanruf-Seitendaten-Demodulationssteuersignale und das FAX-Signal die Facsimileanruf-Seitendaten in einen digitalen Grundband-Bitstrom demoduliert und zusätzliche Steuersignale erzeugt, wobei die

Facsimileanruf-Seitendaten-Demodulationssteuersignale, das FAX-Signal und die zusätzlichen Steuersignale als Facsimileanruf-Remodulationssteuersignale am Ausgang des Seitendaten-Demodulators (112) mit dem digitalen Grundband-Bitstrom geliefert werden, und eine Wählvorrichtung (110, 112, 113), die unter Ansprechen auf das FAX-Signal selektiv ein Ausgangssignal an das Übertragungsnetzwerk von entweder dem Digitalcodierer (110) während Facsimileanruf-Steuernachrichtenteilen des Facsimileanrufs oder von dem Seitendaten-Demodulator (112) während Facsimileanruf-Seitendatenteilen des Facsimileanrufs liefert, derart, daß entweder codierte Facsimileanruf-Steuernachrichtenteile des Facsimileanrufs und das FAX-Signal oder der digitale Grundband-Bitstrom, der Facsimileanruf-Seitendatenteile des Facsimileanrufs darstellt, und die Facsimileanruf-Remodulationssteuersignale an das Übertragungsnetzwerk geliefert werden.

2. Vorrichtung nach Anspruch 1,
bei der die Wählvorrichtung (110, 112, 113) eine erste Steuervorrichtung im digitalen Codierer (110) aufweist, die unter Ansprechen auf ein vorgeschriebenes Signal der Steuersignale (FAX) von der Steuervorrichtung (114) zur steuerbaren Betätigung und Abschaltung ein Ausgangssignal vom digitalen Codierer (110) liefert, und eine zweite Steuervorrichtung im Seitendaten-Demodulator (112), die unter Ansprechen auf das vorgeschriebene Steuersignal von der Steuervorrichtung (115) zur steuerbaren Abschaltung und Betätigung ein Ausgangssignal vom Seitendaten-Demodulator (114) liefert, derart, daß, wenn der digitale Codierer betätigt ist, der Seitendaten-Demodulator abgeschaltet ist und umgekehrt.

3. Vorrichtung nach Anspruch 2,
bei der die Facsimileanruf-Seitendaten Modemmodulierte Grundband-Facsimileseitendaten umfassen und der Seitendaten-Demodulator (112) eine Demodulatorvorrichtung (501) enthält, die unter Ansprechen auf die Seitendaten-Demodulationssteuersignale von der Steuervorrichtung (114) die Modem-modulierten Grundband-Facsimileseitendaten demoduliert, um den digitalen Grundband-Bitstrom zu erhalten.

4. Vorrichtung nach Anspruch 3,
bei der die Steuervorrichtung (114) unter Ansprechen auf die Steuernachrichten Seitendaten-Demodulationssteuersignale erzeugt, die einen Modemtyp und eine Modem-Übertragungsrate eines zur Erzeugung der Facsimileanruf-Seitendaten verwendeten Modems darstellen, bei dem die Modemtyp- und die Modemübertragungsraten-Steuersignale an die Demodulatorvorrichtung (501) geliefert werden und bei dem die Demodulatorvorrichtung (501) unter Ansprechen auf die Modemtyp- und Modemübertragungsraten-Steuersignale die Facsimileanruf-Seitendaten zur Gewinnung des digitalen Grundband-Bitstroms demoduliert.

5. Vorrichtung nach Anspruch 3,
bei der die Demodulatorvorrichtung (501) ein das Ende der Facsimileanruf-Seitendaten darstellendes Signal (RTC) erzeugt, bei der der Seitendaten-Demodulator (112) eine Energiedetektorvorrichtung (502) aufweist, die unter Ansprechen auf die Seitendaten-Demodulationssteuersignale das Vorhandensein oder Nichtvorhandensein von Energie in einem Facsimile-Seitendatenteil des Facsimileanrufs feststellt und ein diesen Umstand darstellendes Signal (END) erzeugt, bei dem das das Ende der Facsimileanruf-Seitendaten darstellende Signal (RTC) und das das Vorhandensein oder Nichtvorhandensein von Energie im Facsimile-Seitendatenteil des Facsimileanrufs darstellende Signal (END) an die Steuervorrichtung (114) geliefert werden, und bei der die Steuervorrichtung (114) unter Ansprechen auf das das Ende der Facsimileanruf-Seitendaten darstellende Signal (RTC) und das das Vorhandensein oder Nichtvorhandensein von Energie im Facsimile-Seitendatenteil des Anrufsignals darstellende Signal (END) die Betätigungs- und Abschaltsteuersignale erzeugt.

6. Vorrichtung nach Anspruch 5,
bei der der Seitendatendemodulator (112) eine Übungsfolgen-Detektorvorrichtung (503) zur Feststellung des Vorhandenseins einer Übungsfolge in dem Facsimileanruf und zur Erzeugung von Übungsfolgen-Steuersignalen aufweist, die eine laufende Übungsfolge und den Typ der Übungsfolge darstellt, bei der die Wählvorrichtung (113) ein Steuersignals (FAX) an das Übertragungsnetzwerk liefert, das die Betätigung des digitalen Codierers (110) und die Abschaltung des Seitendaten-Demodulators (112) darstellt, und zwar zusammen mit einem Ausgangssignal des digitalen Codierers (110), und Steuersignale als Remodulationssteuersignale an das Netzwerk gibt, die darstellen, daß der digitale Codierer (110) abgeschaltet und der Seitendaten-Demodulator (112) betätigt sind, ferner dem Modem-Typ, die Modem-Übertragungsrate, den Umstand, daß die Übungsfolge läuft (TSIP), (FAX), den Übungsfolgentyp (TS TYPE) und das Signal (M-BIT), das das Vorhandensein oder Nichtvorhandensein von Energie während des Facsimile-Seitendatenteils des Facsimileanrufs, wenn der Seitendaten-Demodulator (112) betätigt ist, und bei der der Seitendaten-Demodulator (112) eine Vorrichtung (504) enthält, die ein Ausgangssignal von der Demodulatorvorrichtung (501) in Zeitabschnitten sperrt, in denen die Übungsfolgen-Feststellvorrichtung (503) anzeigt, daß eine Übungsfolge läuft.

7. Vorrichtung nach Anspruch 6,
bei der das Übertragungsnetzwerk (102) eine Paket-Assembliervorrichtung (106 oder 108) zur Erzeugung eines Pakets umfaßt, das wenigstens einen Kopf mit einer Vielzahl von Feldern und ein Datenfeld enthält, wobei die Bits des digitalen Grundband-Datenstroms in das Datenfeld und die Remodulationssteuersignale, die zusammen mit dem digitalen Grundband-Bitstrom geliefert werden, in vorgeschriebene Felder des Kopfes eingegeben werden.

8. Vorrichtung nach Anspruch 6,
bei der das Übertragungsnetzwerk (102) eine Paket-Assembliervorrichtung (106 oder 108) zur Erzeugung eines Pakets aufweist, das wenigstens einen Kopf mit einer Vielzahl von Feldern aufweist, wobei die Steuersignale, die eine laufende Übungsfolge und den Übungsfolgentyp anzeigen, zusammen mit anderen Steuersignalen in vorgeschriebene Felder des Paketkopfes eingefügt werden und das Paket ohne Datenfeld übertragen wird.

9. Vorrichtung nach Anspruch 2 mit einer Empfangsvorrichtung (104 oder 103) zum Empfang eines digitalen Bitstroms, der Sprachband-Signaldarstellungen von wenigstens Sprach- und/oder Facsimileanrufen enthält, die von einer Sendevorrichtung gemäß Anspruch 1 vom Übertragungsnetzwerk (102) geliefert werden, wobei die Empfangsvorrichtung aufweist:

einen digitalen Decoder (116) zur Decodierung codierter Sprachbandsignale im empfangenen digitalen Bitstrom vom Übertragungsnetzwerk (102),
einen Facsimile-Seitendatenremodulator (117), der unter Ansprechen auf empfangene Facsimileanruf-Remodulationssteuersignale aus dem digitalen Bitstrom Facsimileanruf-Seitendaten aus einem empfangenen, digitalen Grundband-Bitstrom im empfangenen digitalen Bitstrom wieder zusammenfügt, und
eine Wählvorrichtung (118), die unter Ansprechen auf empfangenes Facsimileanruf-Anzeigesignal (FAX), nachfolgend FAX-Signal, aus dem empfangenen digitalen Bitstrom ein Ausgangssignal entweder des digitalen Decodierers (116) oder des Facsimile-Seitendatenremodulators (117) auswählt, derart, daß das Ausgangssignal des digitalen Decodierers einschließlich von Facsimileanruf-Steuernachrichten als Ausgangssignal gewählt wird, wenn das empfangene FAX-Signal einen Facsimileanruf-Steuernachrichtenteil des Facsimileanrufs anzeigt, und derart, daß das Ausgangssignal des Facsimile-Seitendatendemodulators einschließlich von Darstellungen Modem-modulierter Facsimileanruf-Seitendaten als Ausgangssignal durch die Wählvorrichtung (118) gewählt wird, wenn das empfangene FAX-Signal einen Facsimileanruf-Seitendatenteil des Facsimileanrufs anzeigt.

10. Vorrichtung (104 oder 103) zum Empfang eines digitalen Bitstroms einschließlich von Sprachband-Signaldarstellungen von wenigstens Sprach- und/oder Facsimileanrufen, die von einer Sendevorrichtung nach Anspruch 1 geliefert werden, von dem Übertragungsnetzwerk (102) mit einem digitalen Decodierer (116) zur Decodierung codierter Sprachbandsignale in dem vom Übertragungsnetzwerk (102) empfangenen, digitalen Bitstrom,

gekennzeichnet durch
einen Facsimile-Seitendaten-Remodulator (117), der unter Ansprechen auf empfangene Facsimileanruf-Remodulationssteuersignale aus dem empfangenen digitalen Bitstrom Facsimileanruf-Seitendaten aus einem empfangenen, digitalen Grundbandbitstrom im empfangenen digitalen Bitstrom wieder zusammensetzt, und eine Wählvorrichtung (118), die unter Ansprechen auf ein empfangenes Facsimileanruf-Anzeigesignal, nachfolgend FAX-Signal, aus dem empfangenen digitalen Bitstrom ein Ausgangssignal entweder vom digitalen Decodierer (116) oder dem Facsimile-Seitendatenremodulator (117) auswählt, derart, daß das Ausgangssignal des digitalen Decodierers einschließlich von Facsimileanruf-Steuernachrichten als Ausgangssignal gewählt wird, wenn das empfangene FAX-Signal einen Facsimileanruf-Steuernachrichtenteil des Facsimileanrufs anzeigt, und derart, daß das Ausgangssignal des Facsimile-Seitendatendemodulators einschließlich von Darstellungen der Modem-modulierten Facsimileanruf-Seitendaten als Ausgangssignal von der Wählvorrichtung (118) gewählt wird, wenn das empfangene FAX-Signal einen Facsimileanruf-Seitendatenteil des Facsimileanrufs anzeigt.

11. Vorrichtung nach Anspruch 10,
bei der der Facsimile-Seitendatenremodulator (117) eine Seitendaten-Remodulatorvorrichtung (705) zur Remodulierung des empfangenen, digitalen Grundband-Bitstroms zur Gewinnung von Modem-modulierten Facsimile-Seitendaten enthält.

**12.** Vorrichtung nach Anspruch 11,
bei der der Facsimile-Seitendatenremodulator (117) eine Bitmuster-Generatorvorrichtung (701) zur Erzeugung eines vorgeschriebenen Bitmusters unter Ansprechen auf vorgeschriebene Steuersignale der empfangenen Steuersignale aufweist, ferner eine Übungsfolgen-Generatorvorrichtung (702) zur Erzeugung einer Übungsfolge unter Ansprechen auf vorgeschriebene Steuersignale der empfangenen Steuersignale, eine Seitendaten-Remodulator-Datenvorrichtung (705), eine Wähler-Steuervorrichtung (703), die unter Ansprechen auf vorgeschriebene Steuersignale der empfangenen Steuersignale die Wählervorrichtung (704) so steuert, daß sie entweder den empfangenen, digitalen Grundband-Bitstrom oder ein Ausgangssignal der Bitmuster-Generatorvorrichtung (701) oder ein Ausgangssignal der Übungsfolgen-Generatorvorrichtung (702) an die Seitendaten-Remodulatorvorrichtung (705) liefert.

## Revendications

**1.** Dispositif pour émettre (101 ou 105) vers un réseau de transmission (102) des signaux numériques entrants (MIC) représentatifs de signaux en bande vocale provenant au moins d'appels vocaux et/ou de télécopie, les signaux représentatifs de signaux en bande vocale provenant de chacun des appels de télécopie ayant des parties qui comprennent des messages de commande d'appel de télécopie et des parties qui comprennent des données de page d'appel de télécopie modulées, le dispositif comprenant

un codeur numérique (110) pour coder et compresser les signaux numériques entrants représentatifs des signaux en bande vocale provenant des appels vocaux et/ou de télécopie,
le dispositif étant CARACTERISE PAR
un démodulateur de canal de commande (111) pour démoduler la partie de message de commande d'un appel de télécopie, afin d'obtenir des messages de commande d'appel de télécopie démodulés,
une unité de commande (114) qui reçoit les messages de commande d'appel de télécopie démodulés, pour générer des signaux de commande de démodulation de données de page d'appel de télécopie, et un signal d'indication d'appel de télécopie, que l'on appelle ci-après signal FAX (FAX), ce signal FAX étant représentatif du fait qu'une partie courante de l'appel est la partie de message de commande d'appel de télécopie ou la partie de données de page d'appel de télécopie,
un démodulateur de données de page (112) qui réagit aux signaux de commande de démodulation de données de page d'appel de télécopie et au signal FAX en démodulant les données de page d'appel de télécopie, pour fournir un train de bits numérique en bande de base, et en générant des signaux de commande supplémentaires, les signaux de commande de démodulation de données de page d'appel de télécopie, le signal FAX et les signaux de commande supplémentaires étant fournis à titre de signaux de commande de remodulation d'appel de télécopie, sous la forme d'un signal de sortie du démodulateur de données de page (112), avec le train de bits numérique en bande de base, et

un dispositif sélecteur (110, 112, 113) qui réagit au signal FAX en fournissant sélectivement un signal de sortie au réseau de transmission soit à partir du codeur numérique (110), pendant des parties de message de commande d'appel de télécopie de l'appel de télécopie, soit à partir du démodulateur de données de page (112) pendant des parties de données de page d'appel de télécopie de l'appel de télécopie, de façon que soit les parties de message de commande d'appel de télécopie codé de l'appel de télécopie et le signal FAX, soit le train de bits numérique en bande de base représentatif de parties de données de page d'appel de télécopie de l'appel de télécopie, et les signaux de commande de remodulation d 'appel de télécopie, soient appliqués au réseau de transmission.

**2.** Dispositif selon la revendication 1, dans lequel le dispositif sélecteur (110, 112, 113) comprend un premier dispositif de commande dans le codeur numérique (110) qui réagit à l'un déterminé des signaux de commande (FAX) provenant de l'unité de commande (114) en activant et en désactivant de façon commandée la fourniture d'un signal de sortie à partir du codeur numérique (110), et un second dispositif de commande dans le démodulateur de données de page (112) qui réagit à l'un déterminé des signaux de commande provenant de l'unité de commande (114), en désactivant et en activant de façon commandée la fourniture d'un signal de sortie du démodulateur de données de page (114), de façon que lorsque le codeur numérique est activé, le démodulateur de données de page soit désactivé et inversement.

**3.** Dispositif selon la revendication 2, dans lequel les données de page d'appel de télécopie comprennent des données de page de télécopie en bande de base modulées par un modem, et le démodulateur de données de page (112) comprend un dispositif démodulateur (501) qui réagit aux signaux de commande de démodulation de données de page provenant de l'unité de commande (114), en démodulant les données de page de télécopie en bande de base modulées par un modem, pour obtenir le train de bits numérique en bande de base.

4. Dispositif selon la revendication 3, dans lequel l'unité de commande (114) réagit aux messages de commande en générant des signaux de commande de démodulation de données de page représentatifs d'un type de modem et d'une vitesse de transmission de modem d'un modem qui est employé pour générer les données de page d'appel de télécopie, ces signaux de commande de type de modem et de vitesse de transmission de modem étant appliqués au dispositif démodulateur (501), et le dispositif démodulateur (501) réagissant aux signaux de commande de type de modem et de vitesse de transmission de modem en démodulant les données de page d'appel de télécopie pour obtenir le train de bits numérique en bande de base.

5. Dispositif selon la revendication 3, dans lequel le dispositif démodulateur (501) génère un signal (RTS) représentatif de la fin des données de page d'appel de télécopie, le démodulateur de données de page (112) comprend un dispositif détecteur d'énergie (502) qui réagit aux signaux de commande de démodulation de données de page en détectant la présence ou l'absence d'énergie dans une partie de données de page de télécopie de l'appel de télécopie, et en générant un signal (END) représentatif de cette condition, le signal (RTC) représentatif de la fin des données de page d'appel de télécopie et le signal (END) représentant la présence ou l'absence d'énergie dans la partie de données de page de télécopie de l'appel de télécopie, étant appliqués à l'unité de commande (114), et l'unité de commande (114) réagissant au signal (RTC) représentatif de la fin des données de page d'appel de télécopie, et au signal (END) représentatif de la présence ou de l'absence d'énergie dans la partie de données de page de télécopie de l'appel de télécopie, en générant les signaux de commande d'activation et de désactivation.

6. Dispositif selon la revendication 5, dans lequel le démodulateur de données de page (112) comprend un dispositif détecteur de séquence d'apprentissage (503) destiné à détecter la présence d'une séquence d'apprentissage dans l'appel de télécopie et à générer des signaux de commande de séquence d'apprentissage représentatifs d'une séquence d'apprentissage en cours et du type de séquence d'apprentissage, le dispositif sélecteur (l13) applique au réseau de transmission un signal de commande (FAX) représentatif du fait que le codeur numérique (110) est activé et que le démodulateur de données de page (112) est désactivé, en compagnie d'un signal de sortie du codeur numérique (110), et il applique au réseau de transmission, à titre de signaux de commande de remodulation, des signaux de commande représentatifs du fait que le codeur numérique (110) est désactivé et que le démodulateur de données de page (112) est activé (FAX), et représentatifs du type de modem, de la vitesse de transmission de modem, du fait que la séquence d'apprentissage est en cours (TSIP), du type de la séquence d'apprentissage (TS TYPE) et du signal (M-BIT) représentatif de la présence ou de l'absence d'énergie pendant la partie de données de page de télécopie de l'appel de télécopie, lorsque le démodulateur de données de page (112) est activé, le démodulateur de données de page (112) comprenant un dispositif (504) pour inhiber un signal de sortie du dispositif démodulateur (501) pendant des intervalles au cours desquels le dispositif de détection de séquence d'apprentissage (503) indique qu'une séquence d'apprentissage est en cours.

7. Dispositif selon la revendication 6, dans lequel le réseau de transmission (102) comprend un dispositif d'assemblage de paquets (106 ou 108) pour générer un paquet comprenant au moins un en-tête ayant un ensemble de champs et un champ de données, les bits du train de bits numérique en bande de base étant introduits dans le champ de données, et les signaux de commande de remodulation qui sont fournis en compagnie du train de bits numérique en bande de base étant introduits dans des champs déterminés dans l'en-tête.

8. Dispositif selon la revendication 6, dans lequel le réseau de transmission (102) comprend un dispositif d'assemblage de paquets (106 ou 108) destiné à générer un paquet comprenant au moins un en-tête ayant un ensemble de champs, les signaux de commande indiquant qu'une séquence d'apprentissage est en cours et le type de séquence d'apprentissage, étant introduits, en compagnie d'autres des signaux de commande, dans des champs déterminés de l'en-tête de paquet, et le paquet étant transmis sans un champ de données.

9. Dispositif selon la revendication 1, comprenant un dispositif récepteur (104 ou 103) destiné à recevoir un train de bits numérique comprenant des représentations sous forme de signal en bande vocale au moins d'appels vocaux et/ou de télécopie provenant du réseau de transmission (102), ce train de bits étant fourni par un dispositif émetteur qui est revendiqué dans la revendication 1, le dispositif récepteur comprenant :

un décodeur numérique (116) pour décoder des signaux en bande vocale codés dans le train de bits numérique reçu provenant du réseau de transmission (102),

un remodulateur de données de page de télécopie (117) réagissant aux signaux de commande de remodulation d'appel de télécopie reçus, provenant du train de bits numérique reçu, en recomposant des données de page d'appel de télécopie à partir d'un train de bits numérique en bande de base reçu dans le train de bits numérique reçu, et

un dispositif sélecteur (118) réagissant à un signal d'indication d'appel de télécopie reçu, que l'on appelle ci-après signal FAX reçu (FAX), provenant du train de bits numérique reçu, en sélectionnant un signal de sortie provenant soit du décodeur numérique (116), soit du remodulateur de données de page de télécopie (117), de façon que le signal de sortie du décodeur numérique comprenant des messages de commande d'appel de télécopie soit sélectionné pour le signal de sortie lorsque le signal FAX reçu indique une partie de message de commande d'appel de télécopie de l'appel de télécopie, et de façon que le signal de sortie du démodulateur de données de page de télécopie comprenant des représentations de données de page d'appel de télécopie modulées par un modem soit sélectionné pour le signal de sortie par le dispositif sélecteur (118) lorsque le signal FAX reçu indique une partie de données de page d'appel de télécopie de l'appel de télécopie.

10. Dispositif (104 ou 103) destiné à recevoir un train de bits numérique comprenant des représentations de signal en bande vocale au moins d'appels vocaux et/ou de télécopie provenant du réseau de transmission (102), ce train de bits étant fourni par un dispositif émetteur qui est revendiqué dans la revendication 1, le dispositif récepteur comprenant

un décodeur numérique (116) pour décoder des signaux en bande vocale codés dans le train de bits numérique reçu provenant du réseau de transmission (102),
le dispositif étant CARACTERISE PAR
un remodulateur de données de page de télécopie (117) réagissant à des signaux de commande de remodulation d'appel de télécopie reçus, provenant du train de bits numérique reçu, en recomposant des données de page d'appel de télécopie à partir d'un train de bits numérique en bande de base reçu dans le train de bits numérique reçu, et
un dispositif sélecteur (118) réagissant à un signal d'indication d'appel de télécopie reçu, que l'on appelle ci-après signal FAX reçu, provenant du train de bits numérique reçu, en sélectionnant un signal de sortie provenant soit du décodeur numérique (116), soit du remodulateur de données de page de télécopie (117), de façon que le signal de sortie du décodeur numérique comprenant des messages de commande d'appel de télécopie soit sélectionné pour le signal de sortie lorsque le signal FAX reçu indique une partie de message de commande d'appel de télécopie de l'appel de télécopie, et de façon que le signal de sortie du démodulateur de données de page de télécopie comprenant des représentations de données de page d'appel de télécopie modulées par un modem, soit sélectionné pour le signal de sortie par le dispositif sélecteur (118) lorsque le signal FAX reçu indique une partie de données de page d'appel de télécopie de l'appel de télécopie.

11. Dispositif selon la revendication 10, dans lequel le remodulateur de données de page de télécopie (117) comprend un dispositif remodulateur de données de page (705) pour remoduler le train de bits numérique en bande de base reçu, pour obtenir les données de page de télécopie modulées par un modem.

12. Dispositif selon la revendication 11, dans lequel le remodulateur de données de page de télécopie (117) comprend un dispositif générateur de configuration de bits (701) destiné à générer une configuration de bits déterminée en réponse à des signaux déterminés parmi les signaux de commande reçus, un dispositif générateur de séquence d'apprentissage (702) destiné à générer une séquence d'apprentissage en réponse à des signaux déterminés parmi les signaux de commande reçus, un dispositif remodulateur de données de page (705), et une unité de commande de sélecteur (703) réagissant à des signaux déterminés parmi les signaux de commande reçus en commandant un dispositif sélecteur (704) de façon qu'il fournisse au dispositif remodulateur de données de page (705) soit le train de bits numérique en bande de base reçu, soit un signal de sortie du dispositif générateur de configuration de bits (701), soit un signal de sortie du dispositif générateur de séquence d'apprentissage (702).

FIG.1

# FIG.2

STANDARD FACSIMILE CALL

| CONTROLLER 114 OPERATION | TRANSMIT CONTROL MESSAGE (CALLING FACSIMILE) | RECEIVE CONTROL MESSAGE (CALLED FACSIMILE) |
|---|---|---|

201 — WAIT FOR DCS-T

DCS-T →

202 — OBTAIN MODEM PARAMETERS, SUPPLY MODEM PARAMETERS TO DEMODULATOR 112, DISABLE ENCODER 110, ENABLE AND SELECT DEMODULATOR 112

203 — WAIT FOR END OF ENERGY

TRAINING CHECK →

204 — DISABLE DEMODULATOR 112, ENABLE AND SELECT ENCODER 110

205 — WAIT FOR CFR-R

← CFR-R

206 — ENABLE AND SELECT DEMODULATOR 112, DISABLE ENCODER 110

207 — WAIT FOR RTC

PAGE DATA →

208 — ENABLE AND SELECT ENCODER 110, DISABLE DEMODULATOR 112

EOP-T →

209 — WAIT FOR EOP-T

← MCF-R

210 — WAIT FOR MCF-R

211 — WAIT FOR DCN-T

DCN-T →

# FIG.3

NON-STANDARD FACSIMILE CALL

| CONTROLLER 114 OPERATION | TRANSMIT CONTROL MESSAGE (CALLING FACSIMILE) | RECEIVE CONTROL MESSAGE (CALLED FACSIMILE) |

**301** WAIT FOR DCS-T

NSS-T →

**302** OBTAIN MODEM PARAMETERS, SUPPLY MODEM PARAMETERS TO DEMODULATOR 112, DISABLE ENCODER 110, ENABLE AND SELECT DEMODULATOR 112

**303** WAIT FOR END OF ENERGY

TRAINING CHECK →

**304** DISABLE DEMODULATOR 112, ENABLE AND SELECT ENCODER 110

**305** WAIT FOR CFR-R

← CFR-R

**306** ENABLE AND SELECT DEMODULATOR 112, DISABLE ENCODER 110

**307** WAIT FOR RTC

PAGE DATA →

**308** ENABLE AND SELECT ENCODER 110, DISABLE DEMODULATOR 112

EOP-T →

**309** WAIT FOR EOP-T

← MCF-R

**310** WAIT FOR MCF-R

**311** WAIT FOR DCN-T

DCN-T →

FIG.4

111,115

CONTROL CHANNEL DEMODULATOR

PCM → | 401 DEMODULATOR | → | 402 HDLC DEFORMATTER | → | 403 HDLC FRAME INTERPRETER | → TO 114

FIG.5

FROM 114

TO 114

112

PCM →

501 PAGE DATA DEMODULATOR — RTC — END

504 → TO 113

502 ENERGY DETECTOR

M-BIT

503 TRAINING SEQUENCE DETECTOR

TSIP

TS TYPE

TO 113

MODEM SPEED

MODEM TYPE

FAX

FACSIMILE PAGE DEMODULATOR

## FIG.6

### FACSIMILE
### PACKET FORMAT

| |
|:---:|
| FLAG |
| TRANSMISSION FIELDS |
| M-BIT |
| FACSIMILE |
| TRAINING SEQUENCE |
| MODEM TYPE |
| MODEM SPEED |
| INFORMATION FIELD |
| CRC |
| FLAG |

FIG.7

FACSIMILE PAGE REMODULATOR

# FIG.8

INPUTS: PKT
M-BIT
TSIP
FAX

OUTPUTS: RESET
SELECT BITS
SELECT BPG 701
SELECT TSG 702